Europäisches Patentamt

European Patent Office

Office européen des brevets

(19)

(11) **EP 1 288 757 A1**

(12) **EUROPÄISCHE PATENTANMELDUNG**

(43) Veröffentlichungstag:
05.03.2003 Patentblatt 2003/10

(51) Int Cl.⁷: **G05B 19/418**

(21) Anmeldenummer: **01119040.2**

(22) Anmeldetag: **07.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **SIEMENS AKTIENGESELLSCHAFT**
**80333 München (DE)**

(72) Erfinder:
• **Glaser, Martin**
**76698 Ubstadt-Weiher (DE)**
• **Kaiser, Oliver, Dr.**
**76744 Wörth am Rhein (DE)**

• **Schoch, Thomas**
**76275 Ettlingen (DE)**
• **Unkelbach, Michael, Dr.**
**91054 Buckenhof (DE)**
• **Wagner, Steffen**
**76297 Stutensee (DE)**
• **Walz, Horst**
**75334 Straubenhardt (DE)**
• **Fischer, Detlef**
**91325 Adelsdorf (DE)**
• **Sauer Hans-Jürgen**
**91074 Niederndorf (DE)**
• **Speh, Rainer Dr.**
**64331 Weiterstadt (DE)**

(54) **Verfahren und Prozessleitsystem zum Betrieb einer technischen Anlage**

(57)    Beim erfindungsgemäßen Verfahren kommen mindestens ein Prozessleitrechner (7) und eine Anzahl von Feldgeräten (FD) zum Einsatz, wobei Zustands- und Steuersignale zwischen mindestens einem Teil der Feldgeräte und dem Prozessleitrechner unter Verwendung eines TCP/IP-Protokolls über einen Kommunikationskanal, bevorzugt eine Funkverbindung (F) und/ oder das Internet (15) übertragen werden. Ein erfindungsgemäßes Prozessleitsystem (5) umfasst einen Prozessleitrechner (7) mit einem Web-Server (9), einen Client-Rechner (20) mit einem Internet-Browser (22) sowie eine Anzahl von Sensoren (S) und Aktuatoren (A); das Prozessleitsystem (5) ist bevorzugt mittels des Internets (15) durch den Client-Rechner (20) bedienbar.

FIG 1

EP 1 288 757 A1

**Beschreibung**

Die Erfindung betrifft ein Verfahren und ein Prozessleitsystem zum Betrieb einer technischen Anlage.

Zur Steuerung einer technischen Anlage wird üblicherweise ein Prozessleitsystem eingesetzt, welches aus einer Anzahl von auf bestimmte Aufgaben spezialisierten Komponenten besteht, die an verschiedenen Orten innerhalb der technischen Anlage, beispielsweise in einem Kraftwerk zur Erzeugung von elektrischer Energie, installiert sind.

Das Prozessleitsystem ist dabei üblicherweise hierarchisch durch mehrere Ebenen strukturiert.

In einer Feldebene werden die Signale, die während des Betriebs der technischen Anlage anfallen und die den Betriebszustand von Anlagenkomponenten beschreiben, erfasst und Steuersignale an Stellglieder der Anlagenkomponenten gesendet.

In einer Automatisierungsebene sind die Steuerungsfunktionen, mittels welcher die Anlage betrieben wird, beispielsweise in mehreren speicherprogrammierbaren Steuerungen (SPS), realisiert. Bei der Realisierung wird zumeist eine spezielle, für Steuerungsaufgaben entwickelte, Steuerungs-Software eingesetzt (z.B. Step 5, Step 7 etc.), welche nur auf bestimmten Typen von CPUs ablauffähig ist, welche wiederum von einem speziellen Betriebssystem betrieben sind. Die Automatisierungsebene empfängt Signale von der Feldebene und gibt Befehle an die Feldebene ab; die Verbindung zwischen Feld- und Automatisierungsebene kann dabei als Einzelverdrahtung jedes Gebers und/oder jedes Stellglieds mit entsprechenden Ein- bzw. Ausgängen der Automatisierungsebene realisiert sein, es kann aber dazu auch ein Feldbussystem mit einem bestimmten, meist sehr speziellen Übertragungsprotokoll eingesetzt sein.

Durch eine Bedien- und Beobachtungsebene ist eine Mensch-Maschine-Schnittstelle gebildet, mittels derer ein Bediener die technische Anlage betreiben und von dieser Informationen erhalten kann. Dabei erhält der Bediener, beispielsweise auf einem Bildschirm eines Rechnersystems in Form von Prozessbildern, graphische Informationen über den Anlagenzustand und er kann, beispielsweise mittels einer Maus und/oder einer Tastatur des Rechnersystems, Betriebs-Befehle in das Rechnersystem eingeben. Die Bedien- und Beobachtungsebene ist oft mittels eines Kraftwerksbussystems mit der Automatisierungsebene verbunden, wobei das Bussystem beispielsweise als Lichtwellenleitersystem ausgebildet und mittels eines speziellen Übertragungsprotokolls betrieben ist.

Das Rechnersystem der Bedien- und Beobachtungsebene umfasst in der Regel eine spezielle, darauf installierte Bedien- und Beobachtungssoftware.

Die Erzeugung der Steuerungs-Software erfolgt meist direkt in der Automatisierungsebene mit Hilfe eines Programmiergeräts, welches an die Automatisierungsgeräte (SPS) angeschlossen wird und mittels welchem der sogenannte Zielcode für das entsprechende Automatisierungsgerät erzeugt wird, und/oder mittels eines separaten Projektierungssystems, welches beispielsweise durch einen Rechner gebildet ist, auf dem z.B. graphisch Bausteine aus einer Bibliothek ausgewählt und miteinander verbunden werden, um eine gewünschte Steuerungsfunktion zu realisieren. Durch anschließende Kompilierung wird aus dem graphischen Funktionsplan der Zielcode generiert, welcher dann auf dem gewünschten Automatisierungsgerät (SPS) der Automatisierungsebene geladen wird und ablauffähig ist.

Der Einsatz eines derartigen, bekannten Prozessleitsystems erfordert also die Verwendung von jeweils auf bestimmte Aufgaben zugeschnittenen Hard- und Softwarekomponenten; die Bedien- und Beobachtungs-Software ist nicht auf den Automatisierungsgeräten ablauffähig und umgekehrt ist die Steuerungs-Software nicht auf dem Rechnersystem des Bedien- und Beobachtungssystems ausführbar. Es müssen somit also zum Betrieb einer technischen Anlage parallel nebeneinander verschiedene Systeme eingesetzt werden, welche nicht geeignet sind, Aufgaben eines der anderen Systeme zu übernehmen. Außerdem können die Systeme auch nicht in nahezu beliebiger räumlicher Entfernung voneinander angeordnet sein, da die Verbindung zwischen ihnen, meist ein Bussystem oder eine Einzelverdrahtung, nicht beliebig verlängerbar ist und zudem eine derartige Verlängerung - sofern diese überhaupt realisierbar ist - sehr kostspielig und fehleranfällig wäre.

Herkömmliche Prozessleitsysteme sind also meist streng hierarchisch angeordnet, wobei in jeder Hierarchieebene speziell auf die jeweilige Aufgabe abgestimmte Systeme wie z.B. die genannten SPS oder die genannten Automatisierungsbussysteme (beispielsweise der Sinec H1-Bus der Firma Siemens oder der Profibus) eingesetzt werden; die genannten Systeme werden dann auch meist mit speziell für die Automatisierungstechnik entwickelten Softwarepakten betrieben. Da, wie bereits erwähnt, die maximal erreichbare Entfernung, in welcher die Komponenten eines bekannten Prozessleitsystems voneinander entfernt installiert sein können, begrenzt ist, ist es in der Praxis meist so, dass praktisch alle Komponenten des Prozessleitsystems innerhalb der technischen Anlage installiert sind.

Ein solches bekanntes Prozessleitsystem ist sehr kostspielig, da spezielle Hard- und Software eingesetzt wird, welche von Experten für den Einsatz in der technischen Anlage noch konfiguriert und parametriert werden muss; weiterhin ist eine Diagnose, Wartung und Optimierung von Komponenten und Funktionen des Prozessleitsystems praktisch nur Vorort möglich. Außerdem existieren bei bekannten Prozessleitsystemen nur sehr begrenzte Steuerungsmöglichkeiten von Orten aus, welche sich außerhalb der technischen Anlage befinden (dazu wird bei bekannten Prozessleitsystemen meistens ein separates System vorgesehen, wie z.B ein Gateway, wobei über dieses speziell auszugestaltende Gateway oft nur ein Teil der Steuerungsaufgaben von Extern erledigt werden kann; es ist dabei häufig eine Kopplung von Systemen mit unterschiedlichen Übertragungsprotokollen unter hohem Aufwand durchzuführen).

Ferner muss ein Bediener spezielle Schulungen erhalten, um das Prozessleitsystem bedienen zu können.

Die strenge hierarchische Struktur eines bekannten Prozessleitsystems kann beispielsweise folgendermaßen ausgebildet sein:

In mindestens einem Automatisierungsgerät (z.B. einer SPS) der Automatisierungsebene sind in einer speziellen Programmiersprache realisierte Steuerprogramme gespeichert und kommen dort zur Ausführung; z.B. ist dort der Regelalgorithmus für den Betrieb eines Motors abgelegt.

Im Bedien- und Beobachtungssystem sind z. B. die graphischen Prozessbilder gespeichert, in denen als dynamische Bildanteile die aktuellen Prozessmess- und Zustandswerte eingeblendet und Kommando-Bereiche bereitgehalten werden, in denen der Benutzer z. B. mit einem Mausklick oder einer Tastatureingabe einen Bedienbefehl (z.B. An-/Abfahren; Sollwertvorgabe etc.) abgeben kann. Der Bedienbefehl wird dann z.B. über ein Kraftwerksbussystem an die Automatisierungsebene übermittelt, wo er dann durch ein auf dem Automatisierungsgerät ablaufendes Steuerprogramm ausgeführt wird, welches dabei z.B. Stellglieder der technischen Anlage ansteuert und Messwerte von Sensoren einliest.

Im Bedien- und Beobachtungssystem ist in dem beispielhaft genannten Fall dann z.B. das Prozessbild des Motors gespeichert, in welches die aktuellen Betriebszustände des Motors (z.B. die Drehzahl, Leistung, Betriebsdauer, Temperatur etc.), welche vom Automatisierungssystem mittels des Kraftwerksbussystems an das Bedien- und Beobachtungssystem gesendet werden, eingeblendet sind. Der Benutzer kann dann z.B. auf eine Befehls-Schaltfläche auf dem Bildschirm klicken oder eine Taste betätigen und den Motor dadurch starten, stoppen oder eine höhere Leistung anfordern usw. (das dem jeweiligen Befehl zugeordnete Steuerprogramm läuft dabei im Automatisierungssystem ab).

In einem Engineering-System des Prozessleitsystems wird z.B. die Steuerungs-Funktionalität des Prozessleitsystems projektiert, indem z.B. auf einer graphischen Bedienoberfläche Steuerungsbausteine aus einer Software-Bibliothek aufgerufen, miteinander verbunden und mit Parameterwerten versorgt werden; die so entstandenen, aus mehreren Steuerungsbausteinen zusammengesetzten Steuerungsprogramme werden dann in denjenigen Zielcode umgesetzt (compiliert), welcher dann auf einem Zielgerät der Automatisierungsebene geladen wird und dort ablauffähig ist. Im Engineering-System kann z.B. auch die Erstellung und Parametrierung der Prozessbilder mit deren statischen und dynamischen Bildanteilen stattfinden; das Prozessleitsystem wird also mittels des spezialisierten Engineering-Systems konfiguriert und projektiert.

Weiterhin kann zusätzlich ein separates Diagnosesystem vorgesehen sein, mit welchem der Betriebszustand der technischen Anlage insbesondere auf kritische Betriebszustände hin überwacht wird.

Zusammengefasst lässt sich sagen, dass ein bekanntes Prozessleitsystem zur Erfüllung seiner Aufgaben eine Vielzahl an spezialisierten, heterogenen Sub-Systemen erfordert, bei denen meist spezielle Hard- und Software eingesetzt wird. Die Bedienung und Konfigurierung eines derartigen heterogenen Gesamtsystems ist daher sehr aufwendig und die Realisierungs- bzw. Anschaffungskosten derartiger Systeme sind sehr hoch. Weiterhin sind solche Prozessleitsysteme unter anderem wegen des hohen Spezialisierungsgrades seiner Sub-Systeme wenig flexibel.

Der Erfindung liegt daher die Aufgabe zugrunde, ein Verfahren und ein Prozessleitsystem zum Betrieb einer technischen Anlage anzugeben, welche die genannten Nachteile überwinden; insbesondere soll der Einsatz von Universal-Rechnern (also nicht speziell für die Automatisierung entwickelten Rechnern und Automatisierungsgeräten) und der Einsatz von Universal-Software (also von bereits möglichst weit verbreiteter, nicht speziell für die Automatisierung entwickelter Software) weitgehend möglich sein.

Bezüglich des Verfahrens wird die Aufgabe erfindungsgemäß durch ein Verfahren zum Betrieb einer technischen Anlage mit einer Anzahl an Feldgeräten zur Überwachung und Steuerung von Komponenten der technischen Anlage, mindestens einem Prozessleitrechner zur Überwachung und Steuerung der technischen Anlage und mindestens einem Kommunikationskanal, über welchen die Feldgeräte mit dem Prozessleitrechner verbunden sind, wobei die Feldgeräte in der technischen Anlage anfallende Messdaten, welche den Betriebszustand mindestens einer der Komponenten beschreiben, an den Prozessleitrechner übermitteln und Steuerungsbefehle vom Prozessleitrechner empfangen, gelöst, wobei die Zustands- und Steuersignale zwischen mindestens einem Teil der Feldgeräte und dem Prozessleitrechner unter Verwendung eines TCP/IP-Protokolls über den Kommunikationskanal übertragen werden.

Die Erfindung geht dabei von der Überlegung aus, dass die Flexibilität des Verfahrens besonders dann erhöht ist, wenn zur Übertragung der Daten der Messdaten- und Steuerungsbefehle ein Protokoll verwendet wird, das bei einer Vielzahl von Kommunikationskanälen einsetzbar ist und welches keine speziell für die Automatisierungstechnik entwickelte Hard- und Software erfordert. Beim erfindungsgemäßen Verfahren soll es dadurch möglich sein, weitgehend bereits vorhandene Kommunikationskanäle für die Übertragung der genannten Daten zu benutzen, insbesondere ohne dafür ein separates, spezielles Bussystem mit einem speziellen Übertragungsprotokoll installieren zu müssen.

Die Kommunikation zwischen den Komponenten des Prozessleitsystems findet beim erfindungsgemäßen Verfahren möglichst weitgehend mit dem genannten Protokoll statt, wobei die beteiligten Kommunikationsteilnehmer (insbesondere die Feldgeräte und der Prozessleitrechner) dabei einen IP-Adressierungsmechanismus unterstützen.

Vorteilhaft umfasst der Kommunikationskanal das Internet und/oder ein Intranet und/oder eine Funkverbindung.

Auf diese Weise ist es möglich, die Komponenten des beim erfindungsgemäßen Verfahren eingesetzten Prozessleitsystems, insbesondere die Feldgeräte, welche bevorzugt in der technischen Anlage angeordnet sind, und den Prozessleitrechner in nahezu beliebiger räumlicher Entfernung voneinander anzuordnen, wobei die Kommunikation zwischen den genannten Komponenten über das bereits in weiten Teilen der Welt verbreitete Internet und/oder ein bereits in einem räumlichen Umfeld installiertes Intranet und/oder über eine Funkverbindung stattfindet. Es ist also nicht erforderlich, den Kommunikationskanal separat als Hardware zu realisieren, was eine enge Begrenzung der möglichen räumlichen Distanzen zwischen den Komponenten des Prozessleitsystems mit sich bringen würde. Im Falle der Verwendung des Internets und/oder des Intranets wird das dort bereits bekannte und verwendete TCP/IP-Übertragungsprotokoll verwendet, so dass zur Realisierung der Kommunikation keine speziellen Entwicklungen und/oder umfangreiche Anpassungen notwendig sind. Auch bei der Verwendung einer Funkverbindung zur Kommunikation kann das TCP/IP-Übertragungsprotokoll leicht eingesetzt werden; die Funkverbindung kann dabei vom Internet und/oder Intranet umfasst sein.

In vorteilhafter Ausgestaltung der Erfindung umfasst der Prozessleitrechner einen Web-Server zur Anbindung des Prozessleitrechners an das Internet und/oder ein Intranet, und Bedien- und Beobachtungsfunktionen der technischen Anlage, welche im Prozessleitrechner softwaretechnisch realisiert sind, werden mittels eines Client-Rechners, welcher einen Internet-Browser umfasst und mit dem Internet und/oder Intranet verbunden ist, mittels eines Internetzugriffs auf den Prozessleitrechner ausgeführt.

In dieser vorteilhaften Ausgestaltung der Erfindung kann der Prozessleitrechner an nahezu beliebigen Orten, an welchen ein Zugang zum Internet und/oder dem Intranet möglich ist, installiert sein. Weiterhin kann die Bedienung und Beobachtung der technischen Anlage auch von einem nahezu beliebigen Ort aus mittels des Client-Rechners durchgeführt werden. Der Client-Rechner muss dabei als Software - neben einem Betriebssystem - im Wesentlichen nur einen bekannten Internet-Browser und ansonsten praktisch keine spezielle Software aufweisen (derartige Client-Rechner werden als "Thin Clients" bezeichnet). Der Client-Rechner kann also über das Internet und/oder das Intranet mittels des Internet-Browsers auf den Prozessleitrechner zugreifen und die dort realisierten Funktionen, welche den Betrieb der technischen Anlage betreffen, über das Internet bedienen. Er kann weiterhin über das Internet die im Prozessleitrechner verarbeiteten Betriebsinformationen, wie z.B. Zustandsmeldungen und Messwerte der technischen Anlage, über das Internet abrufen und auf dem Client-Rechner zur Anzeige bringen. Der Internetzugriff des Client-Rechners auf den Prozessleitrechner umfasst dabei bevorzugt eine Sicherheitsabfrage, z.B. eine Anforderung eines Passwortes, um einen Zugriff von unberechtigten Personen zu verhindern. Es können auch mehrere Passwörter für den Internetzugriff vorgesehen sein, wobei jedem Passwort jeweils eine Benutzungsberechtigung in einem bestimmten Umfang zugeordnet ist.

In weiterer vorteilhafter Ausgestaltung der Erfindung werden die Bedien- und/oder Beobachtungsfunktionen aus Software-Komponenten zusammengesetzt, welche jeweils direkt ausführbaren Softwarecode enthalten.

Eine in Software zu realisierende Gesamtfunktionalität eines erfindungsgemäßen Prozessleitsystems wird dadurch gebildet, indem ihrerseits bereits auf einem Rechner, beispielsweise einem Universal-Rechner, ablauffähige Software-Komponenten, welche eine bestimmte Teilfunktion realisieren, zu einer neuen, umfangreicheren Funktion zusammengesetzt werden. Die Erzeugung der Funktion geschieht also im Wesentlichen dadurch, dass, soweit möglich, bereits realisierte und ablauffähige Teilfunktionen kombiniert werden; die Bedien- und Beobachtungsfunktionen umfassen dabei insbesondere Automatisierungsfunktionen des Prozessleitsystems, durch welche die Komponenten der technischen Anlage gesteuert und/oder geregelt sind.

Vorteilhaft wird mindestens eine der Bedien- und/oder Beobachtungsfunktionen aus mindestens zwei Software-Komponenten zusammengesetzt und ausgeführt, ohne dass zuvor ein Compilierungs- und Ladevorgang dieser Bedien- und/oder Beobachtungsfunktion auf demjenigen Rechner stattfindet, auf dem diese Funktion abläuft.

Die Erstellung und der Ablauf einer derartig neu erzeugten Funktion erfordert also nicht den Zwischenschritt der Umsetzung der Funktion in den Zielcode desjenigen Rechners, auf dem die Funktion ablaufen soll. Die Funktion ist sofort nach dem Zusammensetzen der mindestens zwei Software-Komponenten auf dem Zielrechner ablauffähig. Dadurch ist die so erzeugte Steuerungs-Software praktisch unabhängig von der Rechner-Plattform, auf der sie zum Ablauf kommen soll. Eine geeignete Programmiersprache zur Erstellung derartiger Steuerungs-Software ist die Programmiersprache JAVA, mit welcher Byte-Code erzeugt werden kann, der auf einer sogenannten virtuellen JAVA-Maschine sofort ablauffähig ist; derartige virtuelle Maschinen sind für nahezu alle bekannten, insbesondere universellen, Rechner-Plattformen (Universal-Rechner) erhältlich. Weiterhin sind mit der Programmiersprache JAVA erzeugte JAVA-Applikationen, beispielsweise Steuerungs- und Beobachtungsprogramme für eine technische Anlage, unter den meisten bekannten Web-Browsern direkt ablauffähig und erfordern darüber hinaus keine spezielle Programmablaufumgebung.

Vorteilhaft werden zur Datenerfassung und Befehlsausgabe in der technischen Anlage sogenannte "intelligente" Feldgeräte eingesetzt, welche mindestens über einen eigenen Mikroprozessor verfügen und auf welchen eine vorher beschriebene virtuelle Maschine installiert ist, so dass Bedien- und/oder Beobachtungsfunktionen der technischen Anlage auch auf diese Feldgeräte "ausgelagert" werden und direkt dort ablaufen können. Die genannten Funktionen müssen dabei zur Ausführung auf dem Feldgerät zuvor nicht compiliert und auf diesen geladen werden.

In einer besonders vorteilhaften Ausgestaltung der Erfindung wird im Wesentlichen allen Prozessdaten der technischen Anlage, welche im Prozessleitrechner verarbeitet werden, jeweils eine URL-Adresse zugeordnet.

Die genannte Adressierung ist besonders aus dem Bereich des Internets bekannt, wobei bestimmte Inhalte, wie z.B. Seiten oder andere Datenbereiche des Internets, durch Eingabe der genannten URL-Adresse in einem Internet-Browser gezielt abrufbar sind. Bei der vorliegenden Erfindung werden im Internet bereits verwirklichte Mechanismen verwendet, so dass der gezielte Abruf von Prozessdaten, z.B. mittels eines Client-Rechners, über das Internet einfach möglich ist.

Bezüglich des Prozessleitsystems wird die Aufgabe erfindungsgemäß durch ein Prozessleitsystem zum Betrieb einer technischen Anlage gelöst, welches folgende Bestandteile umfasst:

a) mindestens einen Prozessleitrechner zur Überwachung und Steuerung der technischen Anlage, welcher einen Web-Server umfasst, mittels welchem eine Verbindung zum Internet und/oder einem Intranet derart herstellbar ist, dass in dem Prozessleitrechner anfallende Prozessdaten über das Internet und/oder Intranet übertragbar sind und Daten aus dem Internet und/oder Intranet empfangbar sind,

b) mindestens einem Client-Rechner zur Bedienung- und/oder Beobachtung der technischen Anlage über das Internet und/oder ein Intranet mittels eines auf dem Client-Rechner installierten Internet-Browsers, mittels welchem der Client-Rechner mit dem Internet und/oder Intranet verbindbar ist, und

c) eine Anzahl von in der technischen Anlage angeordneten Sensoren und Aktuatoren, mit welchen in der technischen Anlage Messgrößen aufgenommen bzw. Stellangriffe auf Komponenten der technischen Anlage vorgenommen werden, welche über mindestens einen Kommunikationskanal mit dem Prozessleitrechner verbunden sind und Messdaten an diesen übertragen bzw. Steuerungsbefehle von diesem empfangen.

Ein derartige Prozessleitsystem ist besonders flexibel, da z.B. die Bedienung und Beobachtung der technischen Anlage nicht beschränkt ist auf den Ort der technischen Anlage. Der Prozessleitrechner, mittels welchem die technische Anlage betrieben wird, stellt die in ihm verarbeiteten Prozessdaten mittels des Web-Servers derart zur Verfügung, dass ein Zugriff auf diese Daten über das Internet mittels des Client-Rechners möglich ist. Der Client-Rechner ("Thin Client") muss dabei im Wesentlichen nur über einen bekannten Internet-Browser verfügen und ansonsten keine Spezial-Software aufweisen. Es ist weiterhin möglich, dass die Konfiguration und/oder Parametrierung des Prozessleitsystems mittels des Client-Rechners stattfindet, welcher dabei auf den Prozessleitrechner zugreift. Außerdem kann mittels des Client-Rechners eine (Fern-)Diagnose sowohl des Prozessleitsystems als auch der technischen Anlage durch Zugriff auf den Prozessleitrechner durchgeführt werden.

Vorteilhaft umfasst der Kommunikationskanal eine Funkverbindung und/oder eine Busverbindung und/oder das Internet und/oder ein Intranet.

Auf diese Weise ist es möglich, den Prozessleitrechner nicht unbedingt in unmittelbarer Nähe zur technischen Anlage installieren zu müssen, da die Signale der Sensoren und Aktuatoren, welche bevorzugt in der technischen Anlage angeordnet sind, mittels der genannten Übertragungsmedien über weite Entfernungen (im Falle der Verwendung des Internets praktisch über die gesamte Welt) übertragen werden können. Die Funkverbindung kann dabei vom Internet und/oder Intranet umfasst sein. Der Prozessleitrechner kann sich in diesem Fall z.B. in einem sogenannten Server-Park befinden, der sich bei einem Dienstleistungsanbieter befindet und von diesem betrieben wird. In der technischen Anlage selbst müssen sich im Wesentlichen also nur noch die Sensoren und Aktuatoren befinden, welche die Messdaten der technischen Anlage aufnehmen und die Steuerungsbefehle an diese abgeben.

Besonders vorteilhaft ist der Prozessleitrechner mittels eines Echtzeit-Betriebssystems betrieben und derartig redundant konfiguriert, dass zumindest ein Fehler, welcher während des Betriebs des Prozessleitrechners auftritt, nicht zum Verlust der Funktionalität des Prozessleitrechners führt und der Betrieb des Prozessleitrechners in einem derartigen Fehlerfall praktisch unverzögert und ohne Datenverlust fortführbar ist. Das Echtzeit-Betriebssystem kann dabei ausgebildet sein als Universalbetriebssystem mit Echtzeit-Eigenschaften.

In einer technischen Anlage müssen in der Regel eine Anzahl von zeitkritischen Vorgängen beobachtet und/oder gesteuert und/oder geregelt werden, so dass die hierfür eingesetzten Rechner ein deterministisches Verhalten aufweisen müssen, so dass bestimmte Bearbeitungsschritte in einem bekannten, vorhersagbaren Zeitintervall sicher abgearbeitet werden. Dazu ist der Einsatz eines Echtzeit-Betriebssystems nötig, um Beschädigungen der technischen Anlage und/oder eine Gefährdung für Menschen und die Umwelt auszuschließen und um den Betrieb der technischen Anlage optimal gestalten zu können.

Um eine Störung des Betriebsablaufs der technischen Anlage und/oder eine Gefährdung noch besser ausschließen zu können, ist der Prozessleitrechner zusätzlich bevorzugt "1-Fehlersicher" (redundant) konfiguriert. Dies bedeutet, dass zumindest ein Fehler, der während des Betriebs des Prozessleitrechners auftritt, nicht zum Verlust dessen Funktionalität führt und dessen Betrieb in einem derartigen Fehlerfall praktisch unverzögert und ohne Datenverlust fortführbar ist. So ist sichergestellt, dass insbesondere kritische Vorgänge innerhalb der technischen Anlage, welche vom Prozessleitrechner zu steuern sind, störungsfrei bearbeitet werden können. Dazu können z.B. die wichtigsten Komponenten des Prozessleitrechners mehrfach vorhanden sein und im Fehlerfall ist, z.B. mittels einer Fehlersoftware, dafür gesorgt, dass der Betrieb praktisch unverzögert, mit intakten Komponenten fortgesetzt ist.

Ein derartiger Prozessleitrechner ist also weitgehend ausfallsicher. So ist es auch möglich, praktisch die gesamte Funktionalität des Prozessleitsystems im Prozessleitrechner zu realisieren und auf die streng hierarchische Gliederung bekannter Prozessleitsysteme zu verzichten, indem z.B. mindestens die Automatisierungsebene entfällt, in welche sich üblicherweise spezielle speicherprogrammierbare Steuerungen (SPS) befinden, mit denen auch zeitkritische Aufgaben bearbeitbar sind. Da der Prozessleitrechner des erfindungsgemäßen Prozessleitsystems mittels eines Echtzeit-Betriebssystems auch zeitkritische Aufgaben bearbeiten kann und ausfallsicher redundant konfiguriert ist, kann deshalb mindestens auf die bislang bekannte und Automatisierungsebene und deren spezielle Automatisierungsgeräte verzichtet werden.

Vorteilhaft ist auf dem Prozessleitrechner zumindest ein erster Teil der zur Steuerung der technischen Anlage benötigten Steuerungs-Software installiert und ausführbar.

Der Prozessleitrechner ist eine Kernkomponente des erfindungsgemäßen Prozessleitsystems. Demzufolge ist auf diesem zumindest ein Teil der benötigten Steuerungs-Software installiert und ausführbar. Wenn der Prozessleitrechner echtzeitfähig und/oder ausfallsicher redundant konfiguriert ist, so besteht dieser erste Teil der Steuerungs-Software bevorzugt aus denjenigen Software-Programmen, welche einen zeitkritischen und fehlersicheren Betrieb der technischen Anlage betreffen. So ist gewährleistet, dass zumindest derartige Steuerungsaufgaben weitgehend störungsunanfällig und sicher innerhalb eines genau bestimmten Zeitraums abgearbeitet werden, ohne dass während der Abarbeitung ein Datenverlust auftritt und bereits vorhandene Daten und/oder bereits eingegebene Befehle erneut eingegeben werden müssen.

Vorteilhaft umfasst das Prozessleitsystem mindestens ein Feldgerät zur Überwachung und Steuerung von Komponenten der technischen Anlage, welches einen zweiten Teil der zur Steuerung der technischen Anlage benötigten Steuerungs-Software und mindestens einen Mikroprozessor aufweist, mittels welchem der zweite Teil der Steuerungs-Software auf dem Feldgerät ausführbar ist, wobei das Feldgerät die Messgrößen der technischen Anlage von den Sensoren einliest, vorverarbeitet und an den Prozessleitrechner überträgt und die Steuerungsbefehle vom Prozessleitrechner empfängt, vorverarbeitet und an die Aktuatoren übermittelt.

In dieser vorteilhaften Ausgestaltung der Erfindung werden zumindest ein Teil der Signale der Sensoren und Aktuatoren in einem sogenannten "intelligenten" Feldgerät verarbeitet. Ein Teil der Steuerungsfunktionalität des erfindungsgemäßen Prozessleitsystems ist dabei in diese Feldgeräte "ausgelagert". Dies bedeutet, dass die ausgelagerten Funktionen direkt auf dem Feldgerät zur Ausführung kommen und die entsprechenden Sensor- und/oder Aktuatorsignale direkt vom Feldgerät eingelesen bzw. ausgegeben werden. Somit ist ein Teil der Funktionalität des Prozessleitsystems bei dieser Ausführungsform in den Feldgeräten realisiert. Der Zugriff auf derartige, in den Feldgeräten realisierte Funktionen und deren Bedienung geschieht bevorzugt mittels des Client-Rechners. Die beschriebene Auslagerung von Funktionen in die intelligenten Feldgeräte bietet den Vorteil, dass der Prozessleitrechner mit weniger Speicher- und/oder Rechenressourcen ausgestattet werden kann. Weiterhin können diese Funktionen schneller ausgeführt werden, da sich die Feldgeräte üblicherweise direkt in der technischen Anlage befinden und daher der Datentransfer zu den intelligenten Feldgeräten reduziert ist, weil keine Daten vom Prozessleitrechner zum Feldgerät übertragen werden müssen, welche den internen Ablauf von Steuerungsfunktionen betreffen, da diese Steuerungsfunktionen direkt auf dem Feldgerät ablaufen. Weiterhin ist es möglich, die auf dem Feldgerät verfügbaren Steuerungsfunktionen zu nutzen, selbst wenn z.B. vorübergehend der Prozessleitrechner nicht verfügbar sein sollte.

Derartige, in die Feldgeräte ausgelagerte Funktionen betreffen bevorzugt zeitkritische und/oder sicherheitsrelevante Anforderungen.

Besonders vorteilhaft ist die Steuerungs-Software gebildet aus einer Anzahl von Software-Komponenten, welche folgende Eigenschaften aufweisen:

    a) jede Software-Komponente realisiert eine ihre jeweils zugeordnete Funktion der Steuerungs-Software,

b) jede Software-Komponente umfasst Byte-Code, welcher direkt ohne vorangehenden Compilierungs- und Ladevorgang auf einem Zielrechner, beispielsweise auf dem Prozessleitrechner und/oder auf einem der Feldgeräte, ablauffähig ist,

c) jede Software-Komponente ist eigenständig ablauffähig, in dem Sinn, dass es zu ihrem Ablauf keines parallelen Ablaufs einer anderen Software-Komponente bedarf, und

d) jede Software-Komponente weist jeweils eine Schnittstelle auf, mittels welcher mindestens eine Verbindung von einer ersten zu einer zweiten Software-Komponente und/oder eine Verbindung zum Web-Server und/oder eine Verbindung zu mindestens einem Sensor und/oder Aktuator herstellbar ist, wobei die Schnittstellen zueinander derart kompatibel sind, dass es zur Herstellung der Verbindung keiner Anpassung von Signalen bedarf, welche über die Verbindung übermittelt werden, sondern dass Ein- und/oder Ausgänge der Schnittstelle der ersten Software-Komponente direkt mit Aus- bzw. Eingängen der Schnittstelle der zweiten Software-Komponente verbindbar sind.

Die Software-Komponenten sind dabei unabhängig von der Rechner-Plattform, auf der sie zum Ablauf kommen sollen. Besonders geeignet zur Realisierung derartiger Software-Komponenten ist die Programmiersprache JAVA, mit welcher Byte-Code erzeugbar ist. Derartiger Byte-Code ist auf vielen Rechner-Plattformen direkt ablauffähig, ohne dass es dazu einer Compilierung des Programmcodes bedarf.

Die Software-Komponenten sind bevorzugt in sich abgeschlossen und gekapselt. Dies bedeutet, dass jede Software-Komponente eine ihr jeweils zugedachte Funktion vollständig realisiert und auf die während des Ablaufs der Software-Komponente intern auftretenden Datenflüsse, Werte von internen Variablen usw. der Software-Komponente nicht zugegriffen werden kann. Die Schnittstellen der Software-Komponenten sind zur Erzeugung einer neuen Funktionalität auch während des Ablaufs einer oder mehrerer dieser Software-Komponenten verbindbar, so dass eine Konfigurierung der Steuerungs-Software "online" möglich ist und die resultierende neue Funktion sofort nach Verbindung der Schnittstellen von Software-Komponenten zur Verfügung steht, ohne dass zuvor die mittels der Schnittstellen verbundenen Software-Komponenten compiliert und (neu) geladen werden müssen.

Bevorzugt umfassen der Prozessleitrechner und der Client-Rechner ein Virtuelle-Maschine-Softwareprogramm, so dass zumindest ein Teil der Software-Komponenten sowohl auf dem Prozessleitrechner, als auch auf dem Client-Rechner ablauffähig ist, ohne dass es dazu einer Anpassung der Software-Komponenten an den jeweiligen Zielrechner bedarf.

Besonders vorteilhaft umfasst das Feldgerät das Virtuelle-Maschine-Softwareprogramm, so dass zumindest ein Teil der Software-Komponenten auch auf dem Feldgerät ablauffähig ist, ohne dass es dazu einer Anpassung der Software-Komponenten bedarf.

Die Gesamt-Funktionalität des erfindungsgemäßen Prozessleitsystems wird also durch Software-Komponenten gebildet, welche auf einem Virtuelle-Maschine-Softwareprogramm ablauffähigen Byte-Code enthalten. Dadurch ist die durch die Software-Komponenten realisierte Steuerungs-Software praktisch unabhängig von der Rechner-Plattform, auf der sie zur Ausführung kommen soll. Wenn die Software-Komponenten mittels der Programmiersprache JAVA realisiert sind, so ist der mittels JAVA erstellte Byte-Code auf dem Virtuelle-Maschine-Softwareprogramm, welches praktisch für alle Rechner-Plattformen erhältlich ist, ablauffähig. Des Weiteren sind mittels der Programmiersprache JAVA erzeugte Applikationen praktisch unter jedem bekannten Web-Browser direkt ablauffähig, ohne dass es darüber hinaus einer speziellen Programmablaufumgebung bedarf. Auf intelligenten Feldgeräten ist bevorzugt ebenfalls ein derartiges (JAVA-)Virtuelle-Maschine-Softwareprogramm installiert, so dass bevorzugt durch JAVA erzeugte Software-Komponenten und Verbindungen von Software-Komponenten direkt auf derartigen Feldgeräten ablaufen können. Das erfindungsgemäße Prozessleitsystem ist dadurch sehr flexibel, erfordert praktisch keine spezielle Hard- und Software und ist darüber hinaus hinsichtlich des Installationsortes nicht gebunden; lediglich die Feldgeräte müssen nahe der technischen Anlage oder in dieser installiert sein. Feldgeräte, auf denen das Virtuelle-Maschine-Softwareprogramm nicht implementierbar ist und auf denen somit kein Teil der Steuerungs-Software ablauffähig ist, werden mittels sogenannter "Hardware-Proxies" in das weiter oben erwähnte Software-Komponenten-Konzept eingebunden: Die genannten Hardware-Proxies sind ebenfalls Software-Komponenten, welche Daten von nicht-intelligenten Feldgeräten erfassen und/oder an diese ausgeben und diese (Roh-) Daten so aufbereiten, dass auch diese nicht-intelligenten Feldgeräte über eine Schnittstelle entsprechend der Schnittstelle einer Software-Komponente ansprechbar sind. Derartige Feldgeräte-Softwareprogramme sind also über ihre Hardware-Proxies als "normale" Software-Komponente in die Steuerungs-Software integrierbar.

In einer weiteren vorteilhaften Ausgestaltung der Erfindung weist zumindest ein Teil der Software-Komponenten jeweils eine entsprechend der jeweils realisierten Funktion zugeordnete Meldungsverarbeitungseinheit und/oder Diagnoseeinheit und/oder Bedien- und Beobachtungseinheit und/oder Parametriereinheit auf, und diese Einheiten sind über die Schnittstellen der Software-Komponente zugänglich.

Jede Software-Komponente realisiert möglichst vollständig eine Teil-Funktion der Steuerungs-Software des erfindungsgemäßen Prozessleitsystems.

Nach dieser Ausführungsform der Erfindung enthält zumindest ein Teil der Software-Komponenten jeweils eine Meldungsverarbeitungseinheit, mit welcher, insbesondere während des Ablaufs der Software-Komponente entstehende, kritische und/oder charakteristische Zustandswerte, welche die realisierte Funktion betreffen, über die Schnittstelle der Software-Komponente ausgelesen werden können. Diesen kritischen und/oder charakteristischen Werten kann auch eine entsprechende Text-Meldung zugeordnet sein, welche ebenfalls über die Schnittstelle ausgelesen werden kann. So ist die beschriebene Funktionalität der Meldungsverarbeitung und Alarmbehandlung integraler Bestandteil der Software-Komponente und muss nicht separat, z.B. im Prozessleitrechner, realisiert werden. Zumindest ein Teil der Software-Komponenten kann auch eine Diagnoseeinheit aufweisen, mittels welcher Diagnosesignale erzeugbar sind, die über die Schnittstelle der Software-Komponente auslesbar sind, und welche eine Beurteilung einer momentanen und/oder erwarteten zukünftigen Betriebssituation einer durch eine Software-Komponente gesteuerten Komponente der technischen Anlage erlaubt. Eine derartige Diagnosefunktion muss also bei dieser Ausführungsform der Erfindung nicht separat z.B. im Prozessleitrechner realisiert werden. Zumindest ein Teil der Software-Komponenten kann weiterhin eine Bedien- und Beobachtungseinheit aufweisen, mittels welcher Signale an die Schnittstelle der Software-Komponente übertragen werden, die zur Bedienung der durch die Software-Komponente realisierten Funktion und/oder deren Überwachung genutzt werden. Bei diesen Signalen kann es sich z.B. um eine erste Signalgruppe handeln, welche die in einer graphischen Darstellung verwendbaren wichtigsten Betriebszustandswerte der Funktion umfasst und um eine zweite Gruppe von Signalen, mittels welchen die wichtigsten Befehle, welche durch die Funktion ausführbar sind, umfasst. So ist es nicht notwendig, die zur Bedienung und Beobachtung einer durch eine Software-Komponente gesteuerten Komponente der technischen Anlage erforderlichen Signale z.B. im Prozessleitrechner separat aufzubereiten und/oder zu gruppieren. Außerdem kann zumindest ein Teil der Software-Komponenten eine Parametriereinheit aufweisen, mittels welcher von der Schnittstelle der Software-Komponente Parameterwerte empfangen werden können, welche zur Ausführung der Funktion benötigt werden. Realisiert z.B. eine Software-Komponente einen Regelalgorithmus, so können über die Schnittstelle Parameterwerte an die Parametriereinheit der Software-Komponente übergeben werden, wie z.B. eine Nachstellzeit, eine Vorhaltezeit oder Verstärkungsfaktoren. So können z.B. auch während des Ablaufs der Software-Komponente diese Parameterwerte verändert und der Regelalgorithmus dadurch online optimiert werden. Es ist dabei nicht notwendig, dass z.B. im Prozessleitrechner oder in einem separaten System eine derartige Funktionalität zur Parametrierung der Software-Komponenten bereitgehalten wird.

Die vorher beschrieben zusätzlichen Funktionen Meldungsverarbeitung, Alarmbehandlung, Diagnose, Bedienung und Beobachtung und Parametrierung, welche jeweils durch die Software-Komponenten als deren integrale Bestandteile realisiert sind, machen damit praktisch die vormals bekannten und benötigten, entsprechend spezialisierten Systeme überflüssig. Anstelle spezieller Meldungs- und Alarmverarbeitungssysteme, Diagnosesysteme, Bedien- und Beobachtungssysteme und Engineering-Systeme treten bei dieser Ausführungsform der Erfindung spezielle Sichten auf die Software-Komponenten, wobei jede Sicht eine der genannten Funktionen repräsentiert. Die Sichten sind gezielt durch Zugriff auf die Schnittstelle der Software-Komponenten abrufbar. Vorteilhaft geschieht der Zugriff auf die erwähnten Sichten der Software-Komponenten durch den Client-Rechner, welcher bevorzugt ein Universal-Rechner ist, der mittels Internet-Technologie unter Verwendung eines bevorzugt JAVA-fähigen Internet-Browsers über das Internet oder das Intranet auf den Prozessleitrechner zugreift und die entsprechenden Sichten der Software-Komponenten abruft und visualisiert.

Vorteilhaft ist im Wesentlichen die gesamte zur Steuerung und Überwachung einer technischen Anlage benötigte Funktionalität im Prozessleitrechner integriert.

Auf diese Weise ist die Komplexität des Prozessleitsystems reduziert, insbesondere im Hinblick auf die Anzahl dessen Teil-Systeme.

Besonders vorteilhaft ist allen für die Überwachung und Steuerung der technischen Anlage wesentlichen Prozessdaten, welche im Prozessleitrechner verarbeitet werden, jeweils eine eigene URL-Adresse zugeordnet, so dass mittels des Client-Rechners ein Zugriff zumindest auf Teile dieser Prozessdaten gezielt durchführbar ist.

Der genannte URL-Adressierungsmechanismus ist besonders aus dem Bereich des Internets bekannt. Durch Eingabe einer URL-(Internet)-Adresse in einem Internet-Browser kann somit gezielt auf Teile der Prozessdaten zugegriffen werden. Mittels des Client-Rechners ist es dadurch möglich, durch Eingabe einer URL-Adresse im Internet-Browser des Client-Rechners gezielt z.B. den Momentanwert des Durchflusses einer Pumpe, die Momentandrehzahl eines Motors, Daten in einem Archiv des Prozessleitsystems usw. in der technischen Anlage über das Internet abzurufen.

Im Folgenden werden zwei Ausführungsbeispiele der Erfindung näher dargestellt. Es zeigen:

FIG 1   ein erfindungsgemäßes Prozessleitsystem zum Betrieb einer technischen Anlage, in schematischer Darstellung wobei die Steuerungs-Software im Prozessleitrechner zentralisiert ist,

FIG 2   ein erfindungsgemäßes Prozessleitsystem zum Betrieb einer technischen Anlage in schematischer Darstellung, wobei die Steuerungs-Software auf mehrere Systeme verteilt ist, und

FIG 3 eine schematische Darstellung der Steuerungs-Software für ein erfindungsgemäßes Prozessleitsystem, welche aus mehreren Software-Komponenten gebildet ist.

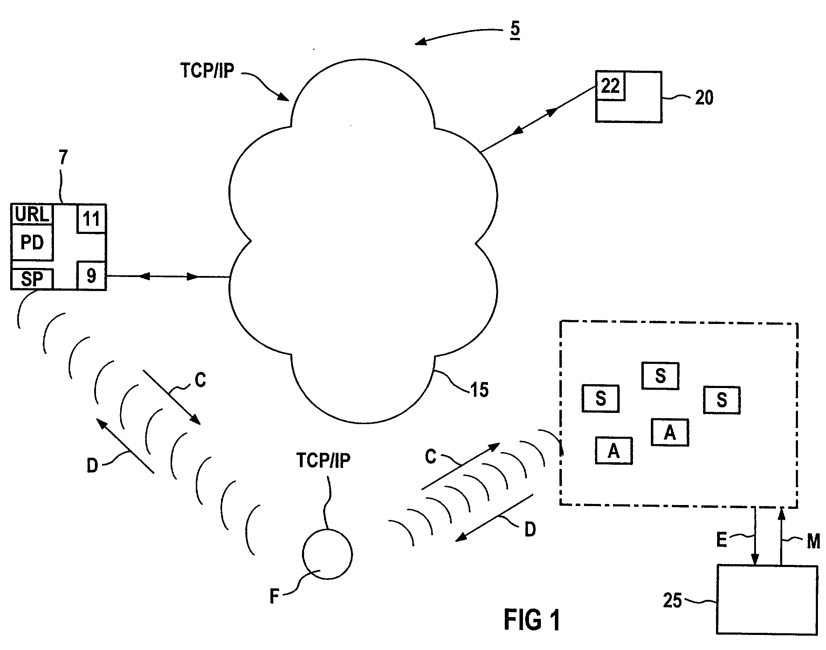

In Figur 1 ist ein Prozessleitsystem 5 dargestellt, welches einen Prozessleitrechner 7, einen Client-Rechner 20 und eine Anzahl von nahe oder in der technischen Anlage 25 angeordneten Sensoren S und Aktuatoren A umfasst.

Der Prozessleitrechner 7 dient zur Überwachung und Steuerung der technischen Anlage 25; er weist einen Web-Server 9 auf, mittels welchem eine Verbindung zum Internet 15 hergestellt ist.

Die in der technischen Anlage 25 anfallenden Messgrößen M werden von den Sensoren S aufgenommen und als Messdaten D über eine Funkverbindung F unter Verwendung eines TCP/IP-Protokolls an den Prozessleitrechner 7 übertragen. Im Prozessleitrechner 7 ist die Steuerungs-Software SP des erfindungsgemäßen Prozessleitsystems implementiert. Diese Steuerungs-Software SP realisiert die zum Betrieb der technischen Anlage 25 erforderlichen Funktionen, indem die Messdaten D eingelesen, verarbeitet und Steuerungsbefehle C über die Funkverbindung F übertragen werden. Die Steuerungsbefehle C führen in der technischen Anlage 25 zu Stelleingriffen E mittels der Aktuatoren A.

Der Prozessleitrechner 7 ist mittels eines Echtzeit-Betriebssystems 11 betrieben, so dass die im Prozessleitrechner 7 ablaufenden Verarbeitungsvorgänge deterministisch sind, so dass vorab bekannt und sichergestellt ist, innerhalb welchen Zeitintervalls ein bestimmter Bearbeitungsvorgang sicher durchgeführt werden kann. Auf diese Weise sind auch zeitkritische Funktionen vom Prozessleitrechner 7 realisierbar, bei welchen ein deterministisches Programmverhalten der Steuerungs-Software unerlässlich ist. Der Prozessleitrechner 7 ist weiterhin ausfallsicher redundant derart konfiguriert, dass ein Fehler, welcher im Prozessleitrechner 7 auftritt, nicht zu dessen Ausfall und damit zum Verlust dessen Funktion führt. In einem derartigen Fehlerfall kann der Betrieb des Prozessleitrechners 7 praktisch unverzögert und ohne Datenverlust weitergeführt werden. Der Prozessleitrechner kann dazu beispielsweise wesentliche Hard- und Softwarebestandteile mehrfach aufweisen und außerdem eine Steuereinheit umfassen, welche im Fehlerfall die noch funktionsfähigen Bestandteile derart koordiniert, dass ein praktisch unverzögerter Betrieb aufrecht erhalten ist.

Die im Prozessleitrechner 7 realisierten Funktionen der Steuerungs-Software SP sowie die Beobachtung der für den Betrieb der technischen Anlage 25 wesentlichen Prozessdaten PD erfolgt hauptsächlich mittels des Client-Rechners 20, welcher einen Internet-Browser 22 zur Anbindung an das Internet 15 umfasst.

Beim erfindungsgemäßen Prozessleitsystem ist es also nicht mehr notwendig, dass sich die Komponenten des Prozessleitsystems praktisch vollständig in oder zumindest sehr nahe bei der technischen Anlage befinden. Die Verwendung des Internets und/oder einer Funkverbindung - wobei die Funkverbindung vom Internet umfasst sein kann - zur Kommunikation zwischen den Komponenten macht eine räumliche Verteilung des Prozessleitsystems auch über sehr weite räumliche Distanzen möglich. Die Steuerungs-Software SP ist bevorzugt in der Programmiersprache JAVA realisiert. Der Internet-Browser 22 des Client-Rechners 20 ist JAVA-fähig, so dass mittels der Programmiersprache JAVA erzeugte Applikationen im Internet-Browser 22 ablaufen können.

Die Prozessdaten PD im Prozessleitrechner 7 sind jeweils mit einer URL-Adresse versehen, so dass über das Internet 15 durch den Client-Rechner 20 durch Eingabe einer einem bestimmten Prozessdatum zugeordneten URL-Adresse im Internet-Browser 22 ein gewünschtes Prozessdatum oder mehrere gewünschte Prozessdaten gezielt abgerufen werden können. Die Verwendung des Internets 15 zur Kommunikation zwischen dem Prozessleitrechner 7 und dem Client-Rechner 20 macht es überflüssig, eine spezielle Kommunikationsverbindung, wie z.B. ein Bussystem, zwischen den genannten Rechnern zu realisieren, da das Internet bereits Übertragungsmechanismen, wie beispielsweise das TCP/IP-Übertragungsprotokoll, bereitstellt, welche vom erfindungsgemäßen Prozessleitsystem benutzt werden. Anstelle der oder in Ergänzung zur Funkverbindung F können die Messdaten D und/oder die Steuerungsbefehle C auch über das Internet 15, vorzugsweise unter Verwendung des TCP/IP-Übertragungsprotokolls übertragen werden. Die Funkverbindung F kann weiterhin vom Internet umfasst sein.

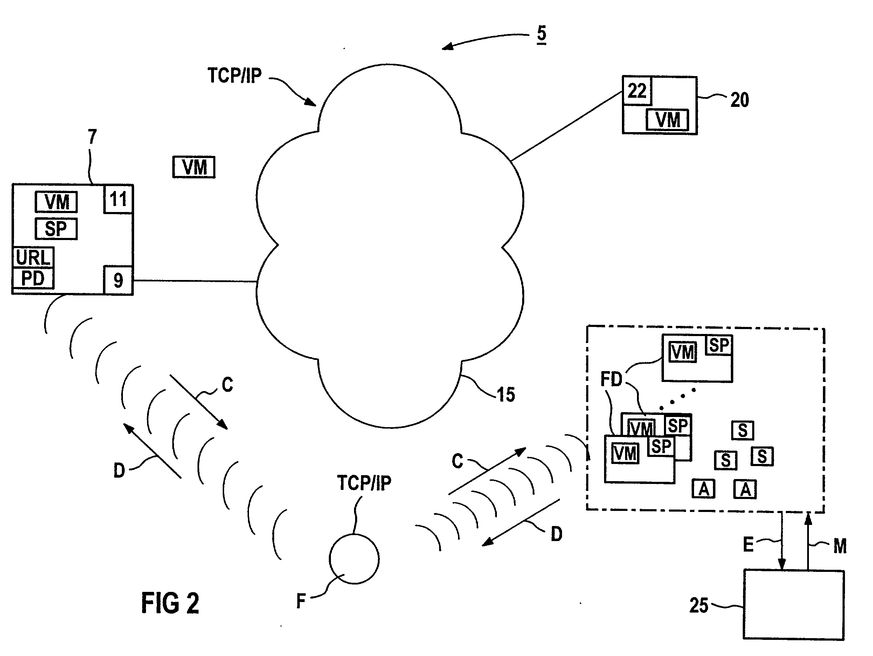

Figur 2 zeigt wie Figur 1 ein erfindungsgemäßes Prozessleitsystem 5, wobei im Unterschied zu Figur 1 zusätzlich Feldgeräte FD mit jeweils einem eigenen Mikroprozessor vorgesehen sind, so dass die Steuerungs-Software SP des Prozessleitsystems 5 verteilt werden kann auf den Prozessleitrechner 7 und ein oder mehrere Feldgeräte FD.

Die in Figur 2 dargestellten Feldgeräte FD werden als intelligente Feldgeräte bezeichnet, weil sie - wie bereits erwähnt - über einen eigenen Mikroprozessor verfügen, auf welchem zumindest einfachere, weniger komplexe Steuerprogramme der Steuerungs-Software SP ausführbar sind, insbesondere Steuerungsprogramme mit zeitkritischen und/oder sicherheitsrelevanten Anforderungen.

Die Steuerungs-Software SP ist gebildet aus einer Anzahl von Software-Komponenten 30.

Auf den Prozessleitrechner 7 und den Feldgeräten FD ist weiterhin ein Virtuelle-Maschine-Softwareprogramm installiert, so dass zumindest ein Teil der Software-Komponenten 30 der Steuerungs-Software SP sowohl auf dem Prozessleitrechner 7, als auch auf den Feldgeräten FD ablauffähig sind, ohne dass es dazu einer Anpassung der Software-Komponenten 30 bedarf. Der Client-Rechner 20 soll ebenfalls ein Virtuelle-Maschine-Softwareprogramm umfassen, so dass zumindest ein Teil der Software-Komponenten 30 auch auf dem Client-Rechner 20 ablauffähig sind, ohne dass dazu die Software-Komponenten 30 angepasst werden müssen. Das Virtuelle-Maschine-Softwareprogramm stellt für Software-Komponenten 30 der Steuerungs-Software SP eine einheitliche Ablaufumgebung dar, egal, auf welcher Hardware-Plattform das Virtuelle-Maschine-Softwareprogramm VM installiert ist. Auf diese Weise ist es möglich, Software-Komponenten 30 der Steuerungs-Software SP nahezu beliebig auf Systeme zu verteilen, auf welchen ein Virtuelle-Maschine-Softwareprogramm installiert ist. Die Verwendung von intelligenten Feldgeräten FD ist besonders vorteilhaft, da diese Feldgeräte meist nahe oder in der technischen Anlage 25 installiert sind und so praktisch keine Verzögerungen bei einer Befehlsausführung oder einem Einlesen von Daten aus der technischen Anlage auftreten. Weiterhin ist die beschriebene Verteilung der Steuerungs-Software SP auf dem Prozessleitrechner 7 und die intelligenten Feldgeräte FD vorteilhaft, da in diesem Falle der Prozessleitrechner 7 von zeitkritischen und/ oder sicherheitsrelevanten Steuerungsaufgaben entlastet werden kann und damit eine Reduktion der Anforderungen, insbesondere hinsichtlich Verfügbarkeit und deterministischer Bearbeitung, an den Prozessleitrechner erzielbar ist.

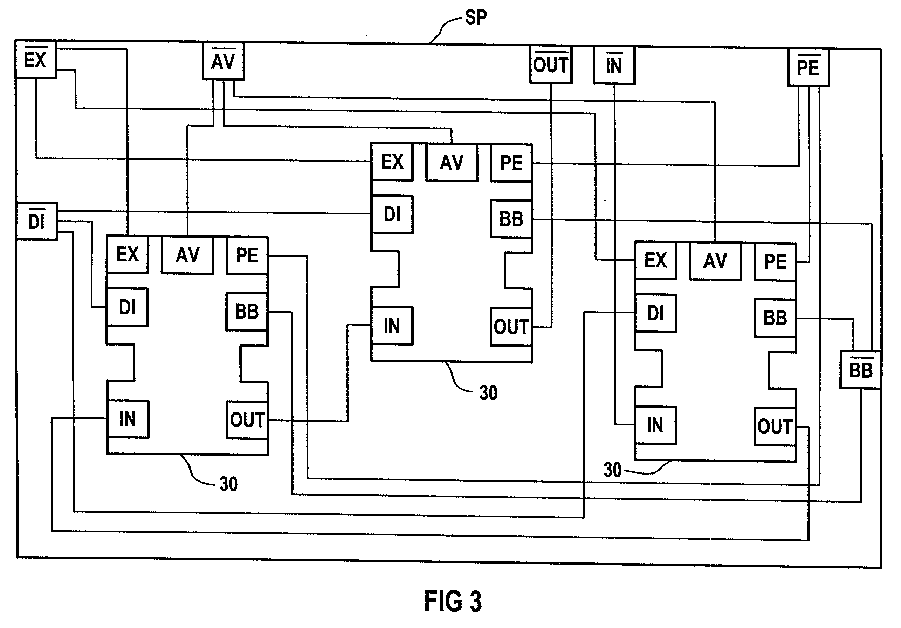

Figur 3 zeigt exemplarisch die Steuerungs-Software SP, welche aus einer Anzahl von Software-Komponenten 30 gebildet ist. Jede Software-Komponente 30 realisiert dabei eine ihr jeweils zugedachte Funktion. Weiterhin umfasst jede Software-Komponente 30 Byte-Code, welcher direkt ohne vorangehenden Compilierungs- und Ladevorgang auf einem Zielrechner, beispielsweise dem Prozessleitrechner und/oder einem Feldgerät FD, ablauffähig ist. Jede Software-Komponente ist eigenständig ablauffähig in dem Sinn, dass es zu ihrem Ablauf keines parallelen Ablaufs einer anderen Software-Komponente bedarf. Die in Figur 3 exemplarisch dargestellte Steuerungs-Software SP ist realisiert durch die Verbindung dreier Software-Komponenten 30. Dazu sind die Schnittstellen der Software-Komponenten 30 derart verbunden, dass ein Ausgang OUT der Schnittstelle der in Figur 3 rechts dargestellten Software-Komponente mit einem Eingang IN der Schnittstelle der in Figur links dargestellten Software-Komponente verbunden ist. Weiterhin ist ein Ausgang OUT der Schnittstelle der in Figur 3 links dargestellten Software-Komponente mit einem Eingang IN der in Figur 3 mittig dargestellten Software-Komponente verbunden. Die durch die Verbindung resultierende Gesamtfunktion der Steuerungs-Software SP kann über einen Eingang $\overline{IN}$ und einen Ausgang $\overline{OUT}$ genutzt werden. Es können mehrere Steuerungsprogramme vorhanden sein, die jeweils wie die Steuerungs-Software SP aufgebaut sind. Diese Steuerungsprogramme können dann über die genannten Ein- und Ausgänge $\overline{IN}$ bzw. $\overline{OUT}$ untereinander Daten austauschen.

Jede Software-Komponente 30 weist weiterhin eine Meldungsverarbeitungseinheit AV, eine Diagnoseeinheit DI, eine Bedienund Beobachtungseinheit BB und eine Parametriereinheit PE auf.

Über die genannten Einheiten sind zusätzlich zu den in den Software-Komponenten realisierten Steuerungsfunktionen auch zugehörige Meldungsverarbeitungsfunktionen, Diagnosefunktionen, Bedienund Beobachtungsfunktionen und Parametrierfunktionen realisiert. Dies bedeutet, dass jede Software-Komponente 30 in sich abgeschlossen ist, nicht nur in funktioneller Hinsicht, sondern auch im Hinblick auf die erwähnten zusätzlichen Funktionen Meldungsverarbeitung, Diagnose, Bedienung und Beobachtung und Parametrierung. Diese Funktionen müssen nicht, wie bei bekannten Prozessleitsystemen üblich, in separaten, spezialisierten Systemen realisiert werden, sondern sie sind selbst bei den kleinsten Bausteinen der Steuerungs-Software SP, den Software-Komponenten 30, verfügbar. Die Kombination der Signale der genannten Einheiten der Software-Komponenten 30 zu jeweils einer übergeordneten Einheit $\overline{AV}, \overline{DI}, \overline{BB}$, und $\overline{PE}$ stellt dann die für jede einzelne Software-Komponente realisierten Einheiten auch für eine Verbindung von Software-Komponenten zur Verfügung, so dass diese Verbindung nach außen wie eine einzelne Software-Komponente 30 wirkt und verwendet werden kann. Die Diagnoseeinheit DI bzw. $\overline{DI}$ kann weiterhin die Funktion und/oder Kommunikation der Software-Komponente 30 sowie ihre eigenen Parameterwerte selbst überwachen, so dass sie quasi selbst-überwacht und unabhängig ablaufen kann. Wie bereits angesprochen sind die Software-Komponenten 30 jeweils direkt ablauffähig, ohne dass es dazu eines vorherigen Compilierungs- und daran anschließenden Ladevorgangs bedarf. Dies gilt auch für die Ablauffähigkeit von Funktionen, welche aus mindestens zwei Software-Komponenten zusammengesetzt sind; die Software-Komponenten 30 werden also bereits während der Konfiguration einer Funktion direkt instanziert. Mittels der Diagnoseinheit DI und/oder $\overline{DI}$ sind bereits während der Konfiguration umfangreiche Diagnose- und/oder Prüfabläufe durch die Software-Komponenten 30 selbsttätig ausführbar, ohne dass derartige, die Funktion der jeweiligen Software-Komponenten 30 betreffende, Diagnose- und/oder Prüfroutinen von einer separaten Einheit und/oder einem separaten Prüfprogramm abgearbeitet werden müssen.

Weiterhin kann eine Software-Komponente 30 auch durch einen graphischen Bedien- und Visualisierungsbaustein ("Faceplate") gebildet sein, welcher einer Anlagen-Komponente der technischen Anlage zugeordnet ist und deren graphische Darstellung hinsichtlich Bedienung und Beobachtung (Anlagen-Komponentenbild mit aktuellen Prozessdatenwerten sowie Befehlseingabemittel zur Steuerung) realisiert.

Eine andere Software-Komponente 30, welche z.B. ein Steuerungsprogramm für eine Anlagen-Komponente umfasst, kann dann direkt über ihre Schnittstelle mit der Schnittstelle des Faceplate wechselwirken. Die Kommunikation zwischen einer Software-Komponente 30 und einer als Faceplate ausgebildeten Software-Komponente wird, insbesondere bei der Verwendung des Internets als Kommunikationskanal, vorteilhaft zunächst gebündelt, d.h. es wird ein Datenaustausch zwischen mehreren Software-Komponenten realisiert, indem zunächst die auszutauschenden Daten als ein ganzes Datenpaket übertragen und die im Datenpaket enthaltenen Daten am Zielort wieder auf die entsprechenden Ziel-Software-Komponenten aufgeteilt werden. Der Datenaustausch zwischen Software-Komponenten 30 jeder Ausbildung kann mittels der beschriebenen Bündelung und Wiederaufteilung der Daten stattfinden. Der Datenaustausch kann dabei entweder zyklisch oder ereignis-gesteuert stattfinden; es können also entweder in festen Zeitabständen bestimmte Daten übertragen werden oder nur dann, wenn ein auslösendes Ereignis, z.B. eine Betriebszustandsänderung, vorliegt. Besonders vorteilhaft wird die Kommunikation als zwischen den Software-Komponenten als Mischform zwischen zyklischer und ereignis-gesteuerter Datenübertragung abgewickelt.

Um die Bearbeitung der durch die Software-Komponenten 30 realisierten Funktionen zu optimieren, werden vorteilhaft nur diejenigen Software-Komponenten 30 ausgeführt, bei welchen sich seit deren letzter Ausführung die zugehörigen, insbesondere die an den Eingängen IN und/oder $\overline{IN}$ anliegenden, Eingangssignale geändert haben. Ansonsten kann auf die bei der letzten Ausführung bereits ermittelten Ausgangssignale, welche insbesondere an den Ausgängen OUT und/oder $\overline{OUT}$ anliegen, zurückgegriffen werden. Dadurch reduziert sich die benötigte Bearbeitungszeit einer durch eine Software-Komponente 30 realisierten Funktion.

Außer den bereits genannten Ausbildungen kann eine Software-Komponente 30 auch durch ein Archiv-Softwareprogramm gebildet sein, in welchem insbesondere die Prozessdaten PD speicherund abrufbar sind, oder durch ein Alarmierungs-Softwareprogramm, mittels welchem insbesondere kritische Werte von zumindest einem Teil der Prozessdaten PD detektierbar und in geeigneter Form, beispielsweise mittels einer Textmeldung auf einem Bildschirm und/oder eines akustischen Signals, anzeigbar sind.

**Patentansprüche**

1. Verfahren zum Betrieb einer technischen Anlage (25) mit einer Anzahl an Feldgeräten (FD) zur Überwachung und Steuerung von Komponenten der technischen Anlage (25), mindestens einem Prozessleitrechner (7) zur Überwachung und Steuerung der technischen Anlage (25) und mindestens einem Kommunikationskanal, über welchen die Feldgeräte (FD) mit dem Prozessleitrechner (7) verbunden sind, wobei die Feldgeräte (FD) in der technischen Anlage (25) anfallende Messdaten (D), welche den Betriebszustand mindestens einer der Komponenten beschreiben, an den Prozessleitrechner (7) übermitteln und Steuerungsbefehle (C) vom Prozessleitrechner empfangen,

   **dadurch gekennzeichnet, dass** Messdaten (D)- und Steuerungsbefehle (D) zwischen mindestens einem Teil der Feldgeräte und dem Prozessleitrechner unter Verwendung eines TCP/IP-Protokolls (TCP/IP) über den Kommunikationskanal übertragen werden.

2. Verfahren nach Anspruch 1,
   **dadurch gekennzeichnet, dass** der Kommunikationskanal das Internet (15) und/oder ein Intranet und/oder eine Funkverbindung (F) umfasst.

3. Verfahren nach Anspruch 1 oder 2,
   **dadurch gekennzeichnet, dass** der Prozessleitrechner (7) einen Web-Server (9) zur Anbindung an das Internet (15) und/oder ein Intranet umfasst und Bedienund/oder Beobachtungsfunktionen der technischen Anlage (25), welche im Prozessleitrechner (7) softwaretechnisch realisiert sind, mittels eines Client-Rechners (20), welcher einen Internet-Browser (22) umfasst und mit dem Internet (15) und/oder Intranet verbunden ist, mittels eines Internetzugriffs auf den Prozessleitrechner (7) ausgeführt werden.

4. Verfahren nach einem der Anspruch 3,
   **dadurch gekennzeichnet, dass** die Bedienund/oder Beobachtungsfunktionen aus Software-Komponenten (30) zusammengesetzt werden, welche jeweils direkt ausführbaren Software-Code enthalten.

5. Verfahren nach Anspruch 4,
   **dadurch gekennzeichnet, dass** mindestens eine der Bedien- und/oder Beobachtungsfunktionen aus mindestens zwei Software-Komponenten (30) zusammengesetzt und ausgeführt wird, ohne dass zuvor ein Compilierungs- und Ladevorgang dieser Bedien- und/oder Beobachtungsfunktion auf demjenigen Rechner stattfindet, auf dem diese Funktion abläuft.

6. Verfahren nach einem der Ansprüche 1 bis 5,
   wobei im Wesentlichen allen Prozessdaten (PD) der technischen Anlage, welche im Prozessleitrechner (7) verarbeitet werden, jeweils eine URL-Adresse (URL) zugeordnet wird.

7. Prozessleitsystem (5) zum Betrieb einer technischen Anlage (25) umfassend folgende Bestandteile:

a) mindestens einen Prozessleitrechner (7) zur Überwachung und Steuerung der technischen Anlage (25), welcher einen Web-Server (9) umfasst, mittels welchem eine Verbindung zum Internet (15) und/oder einem Intranet derart herstellbar ist, dass in dem Prozessleitrechner anfallende Prozessdaten (PD) über das Internet (15) und/oder Intranet übertragbar sind und Daten aus dem Internet und/oder Intranet empfangbar sind,

b) mindestens einen Client-Rechner (20) zur Bedienungund/oder Beobachtung der technischen Anlage über das Internet (15) und/oder ein Intranet mittels eines auf dem Client-Rechner installierten Internet-Browsers (22), mittels welchem der Client-Rechner (20) mit dem Internet (15) und/oder Intranet verbindbar ist, und

c) eine Anzahl von nahe oder in der technischen Anlage angeordneten Sensoren (S) und Aktuatoren (A), mit welchen in der technischen Anlage Messgrößen (M) aufgenommen bzw. Stelleingriffe (E) auf Komponenten der technischen Anlage (25) vorgenommen werden, welche über mindestens einen Kommunikationskanal mit dem Prozessleitrechner verbunden sind und Messdaten (D) an diesen übertragen bzw. Steuerungsbefehle (C) von diesem empfangen.

8. Prozessleitsystem (5) nach Anspruch 7, **dadurch gekennzeichnet, dass** der Kommunikationskanal eine Funkverbindung (F) und/oder eine Busverbindung und/oder das Internet (15) und/oder ein Intranet umfasst.

9. Prozessleitsystem (5) nach Anspruch 7 oder 8, **dadurch gekennzeichnet, dass** die Messdaten und/oder Steuerungsbefehle mittels eines TCP/IP-Protokolls über den Kommunikationskanal übertragen sind.

10. Prozessleitsystem (5) nach einem der Ansprüche 7 bis 9, **dadurch gekennzeichnet, dass** der Prozessleitrechner mittels eines Echtzeit-Betriebssystems (11) betrieben ist und derartig redundant konfiguriert ist, dass zumindest ein Fehler, welcher während des Betriebs des Prozessleitrechners (7) auftritt, nicht zum Verlust der Funktionalität des Prozessleitrechners (7) führt und der Betrieb des Prozessleitrechners (7) in einem derartigen Fehlerfall praktisch unverzögert und ohne Datenverlust fortführbar ist.

11. Prozessleitsystem (5) nach einem der Ansprüche 7 bis 10, **dadurch gekennzeichnet, dass** auf dem Prozessleitrechner zumindest ein erster Teil der zur Steuerung der technischen Anlage benötigten Steuerungs-Software (SP) installiert und ausführbar ist.

12. Prozessleitsystem (5) nach Anspruch 11, **dadurch gekennzeichnet, dass** das Prozessleitsystem (5) mindestens ein Feldgerät (FD) zur Überwachung und Steuerung von Komponenten der technischen Anlage (25) umfasst, welches einen zweiten Teil der zur Steuerung der technischen Anlage benötigten Steuerungs-Software (SP) und mindestens einen Mikroprozessor aufweist, mittels welchem der zweite Teil der Steuerungssoftware auf dem Feldgerät (FD) ausführbar ist, wobei das Feldgerät (FD) die von den Sensoren aufgenommenen Messgrößen (M) der technischen Anlage einliest, vorverarbeitet und an den Prozessleitrechner überträgt und die Steuerungsbefehle (C) vom Prozessleitrechner (7) empfängt, vorverarbeitet und an die Aktuatoren übermittelt.

13. Prozessleitsystem (5) nach Anspruch 11 oder 12, **dadurch gekennzeichnet, dass** die Steuerungs-Software (SP) gebildet ist aus einer Anzahl von Software-Komponenten (30), welche folgende Eigenschaften aufweisen:

a) jede Software-Komponente (30) realisiert eine ihr jeweils zugeordnete Funktion der Steuerungs-Software (SP),

b) jede Software-Komponente (30) umfasst Byte-Code, welcher direkt ohne vorangehenden Compilierungs- und Ladevorgang auf einem Zielrechner ablauffähig ist,

c) jede Software-Komponente (30) ist eigenständig ablauffähig in dem Sinn, dass es zu ihrem Ablauf keines parallelen Ablaufs einer anderen Software-Komponente bedarf, und

d) jede Software-Komponente (30) weist jeweils eine Schnittstelle auf, mittels welcher mindestens eine Verbindung von einer ersten zu einer zweiten Software-Komponente und/oder eine Verbindung zum Web-Server (9) und/oder eine Verbindung zu mindestens einem Sensor (S) und/oder Aktuator (A) herstellbar ist, wobei die Schnittstellen zueinander derart kompatibel sind, dass es zur Herstellung der Verbindung keiner Anpassung von Signalen bedarf, welche über die Verbindung übermittelt werden, sondern dass Ein- (IN) und/oder Ausgänge (OUT) der Schnittstelle der ersten Software-Komponente direkt mit Aus- (OUT) bzw. Eingängen (IN) der Schnittstelle der zweiten Software-Komponente verbindbar sind.

14. Prozessleitsystem (5) nach Anspruch 13, **dadurch gekennzeichnet, dass** der Prozessleitrechner (7) und der Client-Rechner (20) ein Virtuelle-Maschine-Softwareprogramm (VM) umfassen, so dass zumindest ein Teil der Software-Komponenten (30) sowohl auf dem Prozessleitrechner (7), als auch auf dem Client-Rechner (20) ablauffähig sind, ohne dass es dazu einer Anpassung der Software-Komponenten (30) bedarf.

**15.** Prozessleitsystem (5) nach Anspruch 12 in Verbindung mit Anspruch 14,
**dadurch gekennzeichnet, dass** das Feldgerät (FD) das Virtuelle-Maschine-Softwareprogramm (VM) umfasst, so dass zumindest ein Teil der Software-Komponenten (30) auch auf dem Feldgerät (FD) ablauffähig ist, ohne dass es dazu einer Anpassung der Software-Komponenten (30) bedarf.

**16.** Prozessleitsystem (5) nach einem der Ansprüche 13 bis 15,
**dadurch gekennzeichnet, dass** zumindest ein Teil der Software-Komponenten (30) jeweils eine entsprechend der jeweils realisierten Funktion zugeordnete Meldungsverarbeitungseinheit (AV) und/oder Diagnoseeinheit (DI) und/oder Bedien- und Beobachtungseinheit (BB) und/oder Parametriereinheit (PE) aufweist und diese Einheiten über die Schnittstelle der Software-Komponente zugänglich sind.

**17.** Prozessleitsystem (5) nach einem der Ansprüche 7 bis 16,
**dadurch gekennzeichnet, dass** im Wesentlichen die gesamte zur Steuerung und Überwachung einer technischen Anlage (25) benötigte Funktionalität im Prozessleitrechner (7) integriert ist.

**18.** Prozessleitsystem (5) nach einem der Ansprüche 7 bis 17,
**dadurch gekennzeichnet, dass** allen für die Überwachung und Steuerung der technischen Anlage (25) wesentlichen Prozessdaten (RD), welche im Prozessleitrechner (7) verarbeitet werden, jeweils eine eigene URL-Adresse (URL) zugeordnet ist, so dass mittels des Client-Rechners (20) ein Zugriff zumindest auf Teile dieser Prozessdaten (PD) gezielt durchführbar ist.

**FIG 1**

EP 1 288 757 A1

FIG 2

FIG 3

**Europäisches Patentamt**

## EUROPÄISCHER RECHERCHENBERICHT

Nummer der Anmeldung

EP 01 11 9040

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FR 2 781 583 A (CEGELEC) 28. Januar 2000 (2000-01-28) * Abbildungen 2,3 * * Seite 4 - Seite 7 * | 1-3,6-9, 11,12,18 | G05B19/418 |
| Y | * Ansprüche 1,2 * | 4,5,10, 13-17 | |
| X | EP 0 825 506 A (FOXBORO CORP) 25. Februar 1998 (1998-02-25) * Zusammenfassung; Abbildungen 1,2 * * Spalte 2, Zeile 13 - Spalte 6, Zeile 8 * * Spalte 6, Zeile 38 - Zeile 47 * * Spalte 7, Zeile 47 - Spalte 9, Zeile 1 * | 1-3,6-9, 11,18 | |
| Y | * Spalte 10, Zeile 13 - Zeile 29 * | 4,5,13, 14,16,17 | |
| X | EP 0 875 023 A (SIEMENS AG) 4. November 1998 (1998-11-04) * Abbildungen 1,3,4 * * Spalte 2, Zeile 39 - Spalte 3, Zeile 33 * | 1,2,6-9, 11,18 | |
| Y | * Spalte 4, Zeile 8 - Spalte 8, Zeile 12 * | 15 | |
| Y | US 5 146 401 A (BANSAL RAVINDER M ET AL) 8. September 1992 (1992-09-08) * Zusammenfassung; Abbildungen 1,2 * | 10 | |
| A | * Spalte 3, Zeile 52 - Spalte 4, Zeile 41 * | 1,7 | |
| A | US 5 805 442 A (GOLDMAN CRAIG E ET AL) 8. September 1998 (1998-09-08) * Abbildungen 1,2 * * Spalte 2, Zeile 40 - Spalte 3, Zeile 33 * * Spalte 4, Zeile 1 - Spalte 5, Zeile 34 * * Spalte 5, Zeile 66 - Spalte 8, Zeile 63 * | 1-18 | |

RECHERCHIERTE SACHGEBIETE (Int.Cl.7)

G05B

-/--

Der vorliegende Recherchenbericht wurde für alle Patentansprüche erstellt

| Recherchenort | Abschlußdatum der Recherche | Prüfer |
|---|---|---|
| DEN HAAG | 5. Juni 2002 | Cîrîc, G |

Europäisches
Patentamt

**EUROPÄISCHER RECHERCHENBERICHT**

Nummer der Anmeldung

EP 01 11 9040

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WILLIAMS T: "JAVA GOES TO WORK CONTROLLING NETWORKED EMBEDDED SYSTEMS" COMPUTER DESIGN, PENNWELL PUBL. LITTLETON, MASSACHUSETTS, US, Bd. 35, Nr. 9, 1. August 1996 (1996-08-01), Seiten 36-37, XP000631206 ISSN: 0010-4566 * das ganze Dokument * | 1-18 | |
| A | GOLDAMMER G: "HTML-script calls Java-applet...a new development technique under a software- and application-technology configuration" INSPEC, XP002103581 * das ganze Dokument * | 1-18 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| DEN HAAG | 5. Juni 2002 | Cîrîc, G |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 11 9040

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-06-2002

| im Recherchenbericht angeführtes Patentdokument | | Datum der Veröffentlichung | Mitglied(er) der Patentfamilie | | Datum der Veröffentlichung |
|---|---|---|---|---|---|
| FR 2781583 | A | 28-01-2000 | FR | 2781583 A1 | 28-01-2000 |
| | | | EP | 1040397 A1 | 04-10-2000 |
| | | | WO | 0005632 A1 | 03-02-2000 |
| | | | NO | 20001441 A | 22-05-2000 |
| EP 0825506 | A | 25-02-1998 | EP | 0825506 A2 | 25-02-1998 |
| EP 0875023 | A | 04-11-1998 | DE | 29600609 U1 | 13-02-1997 |
| | | | DE | 29622133 U1 | 17-07-1997 |
| | | | DE | 59700413 D1 | 14-10-1999 |
| | | | DK | 875023 T3 | 03-04-2000 |
| | | | EP | 0875023 A1 | 04-11-1998 |
| | | | JP | 3181601 B2 | 03-07-2001 |
| | | | JP | 11510294 T | 07-09-1999 |
| | | | PL | 327615 A1 | 21-12-1998 |
| | | | US | 6263487 B1 | 17-07-2001 |
| | | | AT | 184405 T | 15-09-1999 |
| | | | CN | 1209890 A | 03-03-1999 |
| | | | CZ | 9802220 A3 | 12-05-1999 |
| | | | WO | 9726587 A1 | 24-07-1997 |
| | | | ES | 2136467 T3 | 16-11-1999 |
| | | | HU | 9900247 A2 | 28-05-1999 |
| | | | US | 2001025294 A1 | 27-09-2001 |
| | | | US | 2001037489 A1 | 01-11-2001 |
| US 5146401 | A | 08-09-1992 | AU | 638476 B2 | 01-07-1993 |
| | | | AU | 6136490 A | 14-03-1991 |
| | | | CA | 2024534 A1 | 06-03-1991 |
| | | | DE | 69032495 D1 | 27-08-1998 |
| | | | DE | 69032495 T2 | 21-01-1999 |
| | | | EP | 0416891 A2 | 13-03-1991 |
| | | | JP | 2065069 C | 24-06-1996 |
| | | | JP | 3099302 A | 24-04-1991 |
| | | | JP | 7082367 B | 06-09-1995 |
| US 5805442 | A | 08-09-1998 | US | 5975737 A | 02-11-1999 |
| | | | US | 5982362 A | 09-11-1999 |

EPO FORM P0461

Für nähere Einzelheiten zu diesem Anhang : siehe Amtsblatt des Europäischen Patentamts, Nr.12/82